# EUROPEAN PATENT APPLICATION

(11) **EP 4 418 590 A1**
(43) Date of publication of application: **21.08.2024**
(21) Application number: 23157284.3
(22) Date of filing: 17.02.2023
(51) Int. Cl.: H04L 5/00

(54) **METHOD OF TRANSMITTING A SIDELINK POSITIONING REFERENCE SIGNAL USING RADIO RESOURCES OF A DEDICATED RESOURCE POOL**

(71) Applicant: Robert Bosch GmbH, 70442 Stuttgart (DE)
(72) Inventor: Hassan, Khaled Shawky, 31157 Sarstedt (DE); Stark, Maximilian, 20249 Hamburg (DE)

(57) **Abstract**

A method of transmitting a sidelink positioning reference signal (SL-PRS) using radio resources of a dedicated resource pool (PRS-RP) of a radio access network,
wherein the dedicated resource pool (PRS-RP) for transmitting sidelink positioning reference signals (SL-PRS) excludes radio resources for
transmitting sidelink communication data in the radio access network,
the method comprising:
- Transmitting a sidelink control information (SCI) from a first radio node (UE1) to a second radio node (UE2) using radio resources of the dedicated resource pool (PRS-RP),
wherein the sidelink control information (SCI) indicates radio resources of the dedicated resource pool (PRS-RP) selected for transmitting the sidelink positioning reference signal (SL-PRS); and
- Transmitting the sidelink positioning reference signal (SL-PRS) from the first radio node (UE1) to the second radio node (UE2) using the selected radio resources of the dedicated resource pool (PRS-RP).

## Description

The invention concerns two associated methods of transmitting and receiving respectively a sidelink positioning reference signal using radio resources of a dedicated resource pool of a radio access network, associated radio nodes, a system for radio communication, a computer program, and a non-transitory computer readable medium.

### Background

In 3GPP Release 18, enhancements for positioning determination regarding both higher accuracy and lower latency are studied to meet the requirements of new applications in the vertical industries for cellular communication with higher integrity and better reliability. The studied enhancements inter alia concern sidelink positioning reference signals (SL-PRS) and their allocation possibilities regarding radio resource pools for sidelink communication and/or sidelink positioning.

In a shared radio resource pool, sidelink communication and sidelink positioning reference signals are transmitted using radio resources of the same resource pool. Here, a user equipment (UE) subject to transmission procedure has to select the available resources radio for SL-PRS in time occasions and frequency subcarriers such that overlapping with other communication/positioning resource allocation is avoided. This also allows a receiving UE to carry out a joint sensing procedure of communication signals and SL-PRS.

### Disclosure of the invention

According to a first aspect, there is provided a method of transmitting a sidelink positioning reference signal using radio resources of a dedicated resource pool of a radio access network. Here, the dedicated resource pool for transmitting sidelink positioning reference signals excludes radio resources for transmitting sidelink communication data in the radio access network.

The method according to the first aspect comprises:
- Transmitting a sidelink control information from a first radio node to a second radio node using radio resources of the dedicated resource pool, wherein the sidelink control information indicates radio resources of the dedicated resource pool selected for transmitting the sidelink positioning reference signal; and
- Transmitting the sidelink positioning reference signal from the first radio node to the second radio node using the selected radio resources of the dedicated resource pool.

A resource pool comprises one or several consecutive or non-consecutive, preferably Orthogonal Frequency-Division Multiplexing (OFDM), symbols or slots in the time domain and one or several preferably consecutive or non-consecutive subcarriers or subchannels in the frequency domain. In other words, the resource pool is a set of radio resource elements. The dedicated resource pool comprises radio resources for transmitting sidelink positioning reference signals and sidelink control information, particularly associated with the respective sidelink positioning reference signals.

The dedicated resource pool excludes or rather does not comprise radio resources for transmitting sidelink communication data in the radio access network. In case sidelink communication data is to be transmitted from the first radio node to the second radio node radio resources of a resource pool for transmitting sidelink communication data in the radio access network are used instead. The dedicated resource pool for transmitting sidelink positioning reference signals and sidelink control data and the resource pool for transmitting sidelink data are separated, and preferably not interleaved, in the frequency domain, either with or without a frequency gap between the different resource pools, and/or separated, and preferably not interleaved, in the time domain, preferably by being allocated to different time slots, i.e., either consecutive or non-consecutive slots. In particular, the dedicated resource pool for transmitting sidelink positioning reference signals and the resource pool for transmitting sidelink communication data are non-overlapping in the frequency domain and/or in the time domain. In other words, a frequency range and/or a time range comprising the dedicated resource pool and a frequency range and/or a time range comprising the resource pool for transmitting sidelink communication data are non-overlapping.

In contrast to transmitting sidelink positioning reference signal and sidelink communication data in a shared resource pool, wherein each radio node is required to perform channel sensing for any existing possible means of occupancy (both communication data and positioning reference signals), the concept of a dedicated resource pool for sidelink positioning reference signals requires the radio nodes only to perform channel sensing with respect to positioning reference signals (and respective sidelink control information if transmitted using radio resources of the dedicated resource pool). Additionally, multiple radio nodes may select co-existing radio resources of the dedicated resource pool for transmitting sidelink positioning reference signals concurrently.

A sidelink positioning reference signal can be considered as the main reference signal supporting sidelink-based positioning and/or ranging methods of radio nodes. Specifically, the sidelink positioning reference signal may be used for estimating positioning and/or ranging information of a (anchor) radio node receiving the sidelink positioning reference signal.

The transmitted sidelink control information is used to indicate or identify radio resources of the dedicated resource pool selected for transmitting the sidelink positioning reference signal. The sidelink control information is transmitted using radio resources of the same radio resource pool as used for transmitting sidelink positioning reference signals.

The radio resources of the dedicated resource pool are selected by the radio node transmitting the sidelink control information and the sidelink positioning reference signal. The radio resources may be selected from multiple (pre-) configured sets of consecutive or non-consecutive physical resource elements of the dedicated resource pool. A selection of the radio resources for transmitting the sidelink positioning reference signal by the first radio node may be communicated to the second radio node via the transmitted sidelink control information to make a reservation of the selected radio resources thus reducing or avoiding interference or collisions between sidelink transmissions of different radio nodes in the radio access network. The term "(pre-) configured" pattern / radio resources may be understood as covering "configured" and/or "pre-configured" pattern / radio resources, wherein "pre-configured" refers to an offline configuration of the pattern / radio resources and "configured" to a network-initiated configuration of the pattern / radio resources.

According to a second aspect, there is provided a method of receiving a sidelink positioning reference signal using radio resources of a dedicated resource pool of a radio access network. Here, the dedicated resource pool for transmitting sidelink positioning reference signals excludes radio resources for transmitting sidelink communication data in the radio access network

The method according to the second aspect comprises:
- Receiving a sidelink control information transmitted from a first radio node to a second radio node using radio resources of the dedicated resource pool,
   wherein the sidelink control information indicates radio resources of the dedicated resource pool selected for transmitting the sidelink positioning reference signal; and
- Receiving the sidelink positioning reference signal transmitted from the first radio node to the second radio node using the selected radio resources of the dedicated resource pool.

According to a third aspect, there is provided a first radio node. The first radio node comprises a radio modem, a non-transitory computer readable medium comprising machine-readable instructions, and a processor configured to load and to execute the machine-readable instructions to cause the first radio node to execute the method according to the first aspect, or its embodiments, and thus to transmit a sidelink positioning reference signal using radio resources of a dedicated resource pool of a radio access network.

According to a fourth aspect, there is provided a second radio node. The second radio node comprises a radio modem, a non-transitory computer readable medium comprising machine-readable instructions, and a processor configured to load and to execute the machine-readable instructions to cause the second radio node to execute the method according to the second aspect, or its embodiments, and thus to receive a sidelink positioning reference signal using radio resources of a dedicated resource pool of a radio access network. According to a fifth aspect, there is provided a system for radio communication, comprising a first radio node as defined by the third aspect, and a second radio node as defined by the fourth aspect.

According to a sixth aspect, there is provided a computer program comprising machine-readable instructions to cause
- the first radio node as defined by the third aspect to execute the steps of the method according to the first aspect and/or
- the second radio node as defined by the fourth aspect to execute the steps of the method according to the second aspect.

According to a seventh aspect, there is provided a non-transitory computer readable medium having stored thereon the computer program as defined by the sixth aspect.

The introduced methods of transmitting and receiving respectively a sidelink positioning reference signal and an associated sidelink control information using radio resources of a dedicated resource pool of a radio access network allow to avoid interference or collisions between transmissions of sidelink positioning reference signals and transmissions of sidelink communication data of different radio nodes. The methods further allow for designing the dedicated resource pool independently from a resource pool for sidelink communication data and optimizing the design with regard to specific sidelink positioning requirements, e.g., short response times to request for positioning reference signal transmissions. Moreover, the independency of the resource pool is beneficial since radio resource may be allocated both for licensed and unlicensed radio bands, thus further increasing the flexibility of sidelink positioning. In addition, the proposed solutions also allow for a network-based allocation of a dedicated resource pool by asking a transmitting radio node to transmit sidelink positioning reference signal in an uplink channel and asking a receiving radio node to receive the transmitted sidelink positioning reference signal in the respective uplink channel.

According to an embodiment of the first aspect, the method comprises further comprises transmitting a reference signal associated with the sidelink control information from the first radio node to the second radio node using radio resources of the dedicated resource pool, wherein the reference signal and the sidelink control information are preferably transmitted using the same one or several symbols of the radio resources. In analogy, according to an embodiment of the second aspect the method further comprises receiving a reference signal associated with the sidelink control information from the first radio node to the second radio node using radio resources of the dedicated resource pool, wherein the reference signal and the sidelink control information are preferably transmitted using the same one or several symbols of the radio resources. As an example, two OFDM symbols of a slot may be reserved for transmitting both the sidelink control information and the reference signal. The reference signal can be any kind of sidelink reference signal, e.g., a demodulated reference signal, a sounding reference signal, a reference signal used for phase or time tracking.

According to an embodiment of the first aspect and/or an embodiment of the second aspect
- the sidelink control information is transmitted using one or several consecutive resource elements of the radio resources, and
- the reference signal is transmitted using a reference signal group of multiple separated blocks of at least one or multiple consecutive resource elements, wherein the reference signal group is distributed across a predetermined proportion of a bandwidth or a bandwidth part of the dedicated resource pool, preferably spanning a full bandwidth or a full bandwidth part of the dedicated resource pool.

The resource elements can be consecutive in the time and/or frequency domain. The blocks of the reference signal group can be separated in the frequency and/or time domain. Preferably, the sidelink control information is transmitted using one or several consecutive subcarriers of the radio resources. The reference signal is preferably transmitted using a reference signal group of multiple separated blocks of at least one or multiple consecutive subcarriers.

According to an embodiment of the first aspect and/or an embodiment of the second aspect the multiple separated blocks of the reference signal group are separated by at least one radio resource element for transmitting sidelink control information. The blocks of the reference signal group can be separated in the frequency and/or time domain. Preferably, the multiple separated blocks of the reference signal group are separated by at least one subcarrier for transmitting sidelink control information.

According to an embodiment of the first aspect the method further comprises transmitting a further sidelink control information and a further reference signal from the or a further first radio node to the or a further second radio node using preferably the same one or several symbols of the radio resources of the dedicated resource pool. Here
- the further sidelink control information is transmitted using one or several further consecutive resource elements of the radio resources,
- the further reference signal is transmitted using a further reference signal group of multiple further separated blocks of at least one or multiple consecutive resource elements,
- the multiple separated blocks of the further reference signal group are separated by at least one radio resource element for transmitting sidelink control information, and
- the multiple separated blocks of the reference signal group are further separated by at least block of the further reference signal group.

In analogy, according to an embodiment of the second aspect the method further comprises receiving a further sidelink control information and a further reference signal transmitted from the or a further first radio node to the or a further second radio node using preferably the same one or several symbols of the radio resources of the dedicated resource pool. Here,
- the further sidelink control information is transmitted using one or several further consecutive resource elements of the radio resources,
- the further reference signal is transmitted using a further reference signal group of multiple further separated blocks of at least one or multiple consecutive resource elements,
- the multiple separated blocks of the further reference signal group are separated by at least one radio resource element for transmitting sidelink control information, and
- the multiple separated blocks of the reference signal group are further separated by at least block of the further reference signal group.

The further resource elements can be consecutive in the time and/or frequency domain. The blocks of the further reference signal group can be separated in the frequency and/or time domain. Preferably, the further sidelink control information is transmitted using one or several consecutive subcarriers of the radio resources. The further reference signal is preferably transmitted using a further reference signal group of multiple separated blocks of at least one or multiple consecutive subcarriers. In other words, the radio resources are consecutive or separated at least in the frequency domain, optionally also in the time domain or alternatively in the frequency domain only. This design allows for multiplexing transmissions of SCI and associated reference signals concurrently transmitted from different radio nodes.

According to an embodiment of the first aspect and/or an embodiment of the second aspect
- the sidelink control information and the reference signal are transmitted using a control resource set made up of multiple separated blocks of consecutive resource elements, and
- the control resource set is distributed across a predetermined proportion of a bandwidth or a bandwidth part of the dedicated resource pool, preferably spanning a full bandwidth or a full bandwidth part of the dedicated resource pool.

In other words, the control resource set includes both the sidelink control information and the reference signal, wherein multiple separated blocks of consecutive resource elements represent the control resource set. As an example, the control resource set may be made up of twelve or multiple of twelve resource elements in the frequency domain and one, two, three or more OFDM symbols in the time domain. This alternative design also allows for multiplexing transmissions of SCI and associated reference signals concurrently transmitted from different radio nodes.

According to an embodiment of the first aspect and/or an embodiment of the second aspect each of the blocks of consecutive resource elements comprises both resource elements for transmitting the sidelink control information and resource elements for transmitting the reference signal. Consequently, both the sidelink control information and the reference signal are distributed across the bandwidth (part).

According to an embodiment of the first aspect and/or an embodiment of the second aspect each of the blocks comprises a reference signal group of multiple separated blocks of at least one or multiple consecutive resource elements, wherein the reference signal group is distributed across each block, wherein the multiple separated blocks of the reference signal group are separated by at least one radio resource element for transmitting the sidelink control information.

Consequently, both the sidelink control information and the reference signal are distributed across the resource elements of each block.

According to an embodiment of the first aspect and/or the second aspect
- the sidelink control information and the reference signal are transmitted using one or several symbols of a first part of a slot of the radio resources, wherein the associated sidelink positioning reference signal is transmitted using one or several different symbols of the first part of the slot, and
- a further sidelink control information and a further reference signal are transmitted from the first radio node to the second radio node using one or several symbols of a second part of the slot of the radio resources, wherein an associated further sidelink positioning reference signal is transmitted from the first radio node to the second radio node using one or several different symbols of the second part of the slot.

The first and the second part can be of equal or different length or size, represented by a number of (OFDM) symbols. Preferably, the first part and the second part are non-overlapping and make up the complete slot. As a result, the distance in time between two opportunities for transmitting sidelink positioning signals is reduced, which is highly beneficial for time-critical sidelink positioning applications.

According to an embodiment of the first aspect and/or an embodiment of the second aspect
- the dedicated resource pool comprises multiple (pre-) configured patterns of radio resources for transmitting the sidelink positioning reference signal,
- each of the multiple (pre-) configured patterns is distributed across a predetermined proportion of a bandwidth or a bandwidth part of the dedicated resource pool, and
- the selected radio resources comprise at least one of the multiple preconfigured patterns.

Each of the multiple (pre-) configured patterns comprises multiple radio resource elements made up of one (OFDM) symbol in the time domain and one subcarrier in the frequency domain. For each of the multiple (pre-) configured patterns, the multiple radio resource elements represent a defined arrangement or pattern in the time and frequency domain. The multiple radio resource elements of each pattern can be non-consecutive, partially consecutive, or fully consecutive in the time and/or the frequency domain. A pattern of partially consecutive radio resource elements represents a pattern for which at least two resource elements are consecutive and at least two resource elements are non-consecutive in the time and/or the frequency domain.

A (pre-) configured pattern distributed across a predetermined proportion of a bandwidth (part) is a pattern comprising at least one radio resource element from all N segments of the predetermined proportion of a bandwidth (part), wherein the N segments preferably of equal make up the predetermined portion of the bandwidth (part) and N is equal or greater than 2. Specifically, a (pre-) configured pattern distributed across a predetermined proportion of a bandwidth (part) is a pattern comprising at least one radio resource element from all resource blocks of the predetermined proportion of a bandwidth (part). The predetermined proportion of the bandwidth (part) may comprise the full bandwidth (part), or only a part, e.g., 80%, of the full bandwidth (part).

Each radio node may select a different (pre-) configured pattern to transmit a positioning reference signal. Transmissions of multiple radio nodes may multiplex themselves on the same dedicated resource pool, thus avoiding collisions between simultaneous transmissions of different radio nodes.

According to an embodiment of the first aspect and/or an embodiment of the second aspect each of the multiple (pre-) configured patterns comprises different at least partially, preferably exclusively non-consecutive subcarriers for each of the at least two symbols, such that all subcarriers of the predetermined proportion of the bandwidth or the bandwidth part are comprised by each of the multiple preconfigured patterns, such that the multiple (pre-) configured patterns preferably form an interlace structure across the predetermined proportion of the bandwidth or the bandwidth part. As an example, each of the multiple (pre-) configured patterns may comprise a first subset of all subcarriers for a first symbol and at least one second subset of all subcarriers for a at least one second symbol, wherein a joint set of the first and the at least one second subset comprises all subcarriers of the predetermined proportion of the bandwidth (part). Here, the first subset and the at least one second subset may be partially overlapping or disjoint regarding the comprised subcarriers. Specifically, the first subset and the at least one second subset may comprise non-consecutive subcarriers only, or at least non-consecutive segments of consecutive subcarriers. Thus, for each symbol of the slot, each of the multiple (pre-) configured patterns has a comb-like structure.

In other words, the interlace structure may be understood as a structured assignment of the radio resources of the dedicated resource pool to the multiple transmission patterns. Here, the dedicated resource pool may be divided or distributed or assigned to the multiple transmission patterns such that the multiple transmissions patterns are interleaved across a predetermined proportion of the bandwidth (part). In other words, the interlace structure consists of multiple interleaved interlace patterns, each of them representing a transmission resource. By forming the interlace structure of the sidelink channel across the predetermined proportion of the dedicated resource pool, each of the multiple patterns allows to distribute single transmissions of sidelink positioning reference signals across the frequency range of the predetermined proportion of the bandwidth (part).

This design of the dedicated resource pool allows for transmitting sidelink positioning reference signals of different radio nodes simultaneously thus further increasing the efficiency when transmitting of sidelink positioning reference signals and reducing the delay in responses to requests for sidelink positioning reference signals.

According to an embodiment of the first aspect and/or an embodiment of the second aspect, the indication of the selected radio resources in the transmitted sidelink control information comprises information regarding at least one of:
- the at least one selected (pre-) configured pattern,
- repetition information, particularly periodicity information of at least one selected (pre-) configured pattern,
- starting time of the transmission of the sidelink positioning reference signal using the at least one selected (pre-) configured pattern,
- offset between start of transmission of sidelink control information and transmission of the associated sidelink positioning reference signal.

The at least one selected (pre-) configured pattern can be indicated by including a pattern identification number in the sidelink control information. The repetition information, particularly the periodicity information may be the same or different for different (pre-) configured patterns. The offset may refer to a difference in time between the start of transmitting the sidelink control information and the start of transmitting the respective sidelink positioning reference signal.

According to an embodiment of the first aspect and/or an embodiment of the second aspect the selected radio resources indicated by the sidelink control information are reserved for transmitting the sidelink positioning reference signal for a reservation time, which is
- equal to a (pre-) configured maximum reservation time or
- shorter than a (pre-) configured maximum reservation time, wherein the shorter reservation time is indicated by the transmitted sidelink control information.

For each of the multiple (pre-) configured patterns, the same or different maximum reservation times can be (pre-) configured.

According to an embodiment of the first aspect and/or an embodiment of the second aspect the selected radio resources reserved for transmitting the sidelink positioning reference signal are released in case no positioning reference signal is transmitted from the first radio node to the second radio node for a time greater than a defined maximum dropping time. For each of the multiple (pre-) configured patterns, the same or different maximum dropping times can be (pre-) configured.

According to an embodiment of the first aspect the method further comprises:
Transmitting a further sidelink control information from the first radio node to the second radio node using radio resources of the dedicated resource pool, wherein the further sidelink control information indicates
- releasing at least parts of the selected radio resources reserved for transmitting the sidelink positioning reference signal, or
- prolonging the reservation time, preferably by a prolongation time which is either (pre-) configured or indicated by the transmitted further sidelink control information.

In analogy, according to an embodiment of the second aspect the method further comprises:
Receiving a further sidelink control information transmitted from the first radio node to the second radio node using radio resources of the dedicated resource pool, wherein the further sidelink control information indicates
- releasing at least parts of the selected radio resources reserved for transmitting the sidelink positioning reference signal, or
- prolonging the reservation time, preferably by a prolongation time which is either (pre-) configured or indicated by the received further sidelink control information.

Consequently, the efficiency of using the radio resources of the dedicated resource pool can be further increased by making reserved future radio resources available again for transmissions of other sidelink positioning reference signal. At the same time, the option to prolong reservation times allows to flexibly respond to further positioning requests from a target radio node by re-newing the reservation.

According to an embodiment of the first aspect the method further comprises receiving, by the first radio node, a sidelink control information transmitted from the second radio node using radio resources of the dedicated resource pool, wherein
- the received sidelink control information indicates a request for transmitting the sidelink positioning reference signal from the first radio node to the second radio node and
- the sidelink control information and/or the sidelink positioning reference signal are transmitted from the first radio node to the second radio node in response to the received sidelink control information.

In analogy, according to an embodiment of the second aspect the method further comprises transmitting a sidelink control information from the second radio node to the first radio node using radio resources of the dedicated resource pool, wherein
- the transmitted sidelink control information indicates a request for transmitting the sidelink positioning reference signal from the first radio node to the second radio node, and
- the received sidelink control information and/or received the sidelink positioning reference signal are transmitted from the first radio node to the second radio node in response to the sidelink control information transmitted from the second radio node to the first radio node.

Consequently, the second radio node may trigger the transmission of a sidelink positioning reference signals, particularly for positioning and/or ranging determination purposes.

According to an embodiment, the first and second radio nodes are members of a 5G NR network. The first and/or second radio node may be a user equipment. The first and/or second radio node may comprise an input interface configured to obtain input data, for example commands from a higher layer to perform sidelink communication. The first and/or second radio node may comprise a power supply and/or an antenna coupled to the radio modem of the respective radio node. The first and/or second radio node may support device to device, internet of things, and/or V2X communications.

### Description of the figures

Exemplary embodiments of the present invention are depicted in the figures, which are not to be construed as limiting the claims, and are explained in greater detail below.
- Fig. 1: schematically shows a resource diagram to illustrate the transmission of sidelink positioning reference signals and of respective sidelink control information according to a first embodiment;
- Fig. 2: schematically shows a resource diagram to illustrate the transmission of sidelink positioning reference signals and of respective sidelink control information according to a second embodiment;
- Fig. 3: schematically shows a section of a resource diagram according to a third embodiment;
- Fig. 4: schematically illustrates a signalling protocol for transmitting sidelink positioning reference signals and sidelink control information according to an embodiment of the invention; and
- Fig. 5A,B: schematically illustrate methods according to the first and the second aspect.

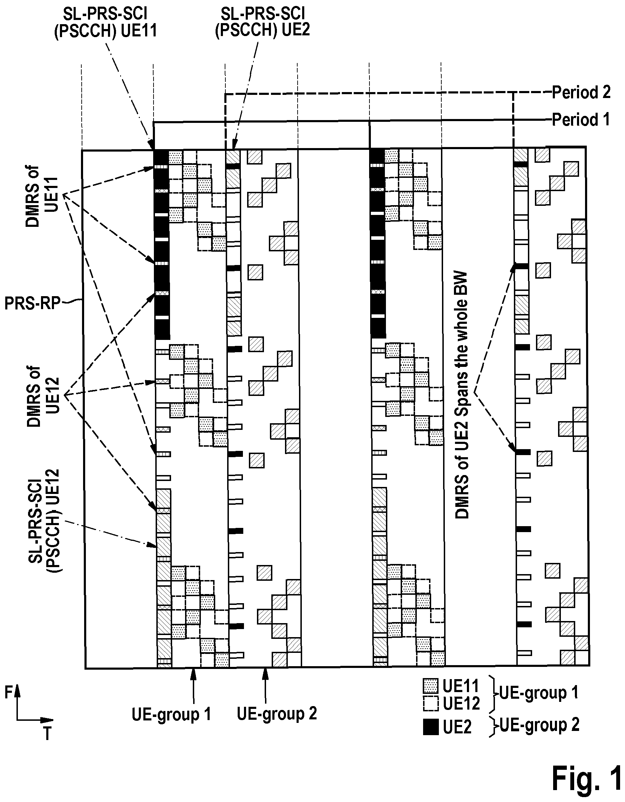

Fig. 1 schematically shows a resource diagram to illustrate the transmission of sidelink positioning reference signals (SL-PRS) and of respective sidelink control information (SCI) according to a first embodiment. Here, the horizontal axis represents the time domain and the vertical axis represents the frequency domain.

The SL-PRS and the SCI are transmitted using radio resources of a dedicated resource pool PRS-RP of the radio access network. The dedicated resource pool PRS-RP comprises multiple consecutive slots in the time domain and multiple consecutive subchannels in the frequency domain.

For transmitting SL-PRS, the dedicated resource pool PRS-RP comprises (pre-) configured patterns of radio resources. Each of the (pre-) configured patterns comprises multiple consecutive symbols and all subcarriers of the dedicated resource pool PRS-RP. Specifically, each of the (pre-) configured patterns comprises radio resource elements distributed across all symbols of the slot and all subcarriers of the dedicated resource pool PRS-RP. The multiple (pre-) configured patterns are coexistent within each OFDM symbol of the slot.

Here, each of the multiple (pre-) configured patterns SL-PRS-pat1, SL-PRS pat 2 comprises different at least partially, preferably exclusively non-consecutive subcarriers for each of symbol of the slot such that all subcarriers of the dedicated resource pool PRS-RP are comprised by each of the multiple preconfigured patterns. As a consequence, the multiple (pre-) configured patterns form an interlace structure across the bandwidth of the dedicated resource pool PRS-RP. Particularly, for each symbol of the slot, each of the multiple (pre-) configured patterns has a comb-like structure. The multiple (pre-) configured patterns may be selected and reserved by different radio nodes, e.g., a first (pre-) configured pattern may be selected and reserved by a first radio node (UE1) and a second (pre-) configured pattern may be selected and reserved by a second radio node (U E2), wherein the first and the second radio node (U E2) may be part of a defined group of radio nodes.

The group of the radio nodes may share a slot each of the radio nodes being dedicated to, at least, one SL-PRS pattern. As such, the group of radio nodes can be a group of anchor, i.e., assisting, radio nodes that responds to a requesting so-called target radio node UE to perform sidelink positioning.

Additionally, the group of radio nodes may be a group allocating resources for group cast communication, e.g., being within a communication range or being within a group with a group member ID. Additionally or alternatively, a group of radio nodes may be considered geographically or allocated by the network. Once a group of radio nodes is formed or identified, it is assumed that there may be one or more radio nodes contributing or transmitting SL-PRS with specific pattern(s). The patterns of the group may be orthogonal (non-overlapping SL-PRS symbols among the group members) or quasi orthogonal (allowing partial overlapping of the SL-PRS symbols among the group members with a certain criteria). Specifically, for a slot of time, as defined in the time frequency resources grid, comprising more than one pattern for transmitting SL-PRS, each of the radio nodes of the group may select a pattern in the same slot.

Each of the patterns is repetitive in the time domain, wherein the patterns preferably are repeated periodically.

Each of the patterns can be selected as radio resources for transmitting SL-PRS by a radio node, e.g., a user equipment. To communicate the selection of one of the patterns to one or several other radio nodes, e.g., user equipments, and to reserve the selected pattern for transmitting the SL-PRS, a SCI is transmitted from the first radio node (UE1) to the one or several other radio nodes using radio resources of the dedicated resource pool PRS-RP for transmitting SCI.

In addition, a reference signal associated with the SCI is transmitted from the first radio node (UE1) to the second radio node (UE2) using radio resources of the dedicated resource pool PRS-RP. Here, the reference signal and the SCI are transmitted using the same one or several symbols of the radio resources (in the first slot according to the embodiment illustrated in Fig. 1).

The SCI is transmitted using consecutive resource elements of the radio resources. In contrast, the associated reference signal is transmitted using a reference signal group of multiple separated blocks of consecutive resource elements comprising consecutive subcarriers. In this embodiment, the reference signal group is distributed across the full bandwidth of the dedicated resource pool PRS-RP, thus spanning the full bandwidth of the dedicated resource pool PRS-RP.

The multiple separated blocks of the reference signal group are separated by at least one radio resource element for transmitting SCI. Specifically, every two blocks of the reference signal group, each of them comprising consecutive subcarriers, are separated by at least one subcarrier for transmitting SCI.

The design of the dedicated resource pool PRS-RP allows for multiplexing transmissions of SCI transmitted from different radio nodes to concurrently reserve radio resources of the dedicated resource pool PRS-RP for transmitting SL-PRS.

In the embodiment of Fig. 1, a further SCI and a further reference signal is transmitted from a further first radio node (U E1) to the second radio node (U E2) using preferably the same symbols of the radio resources of the dedicated resource pool PRS-RP. Particularly, the further SCI is transmitted using further consecutive resource elements of the radio resources. The further reference signal is transmitted using a further reference signal group of multiple further separated blocks of consecutive resource elements. The multiple separated blocks of the further reference signal group are separated by at least one radio resource element for transmitting SCI. The multiple separated blocks of the reference signal group are further separated by at least block of the further reference signal group.

Each of the SCI comprise an information allowing to identify the selected radio resources for transmitting SL-PRS, particularly a selected (pre-) configured pattern, e.g., an identification number of the selected pattern.

The start of transmitting the SL-PRS can be signaled by including a starting time information in the SCI. Alternatively, the SCI may comprise an offset between a start of transmitting the SCI and a start of transmitting the respective SL-PRS.

The offset between a start of transmitting the SCI and a start of transmitting the respective SL-PRS can either be (pre-) configured preferably for the selected pattern. As an alternative, the offset can be selected from at least two (pre-) configured offsets, wherein the selected offset is indicated by the SCI.

The selected radio resources indicated by the sidelink control information are reserved for transmitting the sidelink positioning reference signal for a specific reservation time. The reservation time can be equal to a (pre-) configured maximum reservation time, which may be assigned to the selected radio resources, in particular the selected (pre-) configured patterns SL-PRS-pat1, SL-PRS-pat2. For different (pre-) configured patterns SL-PRS-pat1, SL-PRS-pat2, the maximum reservation time may be identical or different. Alternatively, the reservation time can be shorter than a (pre-) configured maximum reservation time. Here the shorter reservation time is indicated by the transmitted SCI.

To release at least parts of the selected radio resources reserved for transmitting the sidelink positioning reference signal or to prolong the reservation time, a further SCI is transmitted from the first radio node (UE1) to the second radio node (UE2) using radio resources of the dedicated resource pool PRS-RP.

The basic idea of the design illustrated in Fig. 1 is to provide subchannels for transmitting SCI punctured for subchannels for transmitting reference signals, wherein the subchannels for transmitting reference signals span the complete dedicated resource pool PRS-RP in the frequency domain. In other words, reference signal groups are provided which span the full bandwidth (part) of the dedicated resource pool PRS-RP yet leaving enough space for intermittent short SCI. Each of the SCI can be used by one or several users to indicate and reserve radio resources of the dedicated resource pool PRS-RP for transmitting SL-PRS. Thereby, SL-PRS from multiple users are multiplexed by transmitting SL-PRS with (pre-) configured comb-based patterns.

As an example, the provided reference signal groups may densify themselves within a Physical Shared Control Channel (PSSSC) corresponding to a short SCI associated with a SL-PRS and relax over frequency outside the short SCI. In addition, a specific group of Sidelink Control Channel Element (SL-CCE) may be provided, for each of which a group of preferably Demodulated Reference Signals (DMRS) is provided. Each DMRS group associated with a respective SL-CCE may have its own specific, particularly unique, DMRS pattern.

The second radio node (U E2) may be configured to monitor a specific set of time symbols (e.g., two symbols in a SL slot) for identifying a specific set of (pre-) configured PSCCH resource elements indicating an associated SL-PRS pattern. Here, the specific comb-based SL-PRS pattern guarantees no overlapping with concurrently transmitting radio nodes.

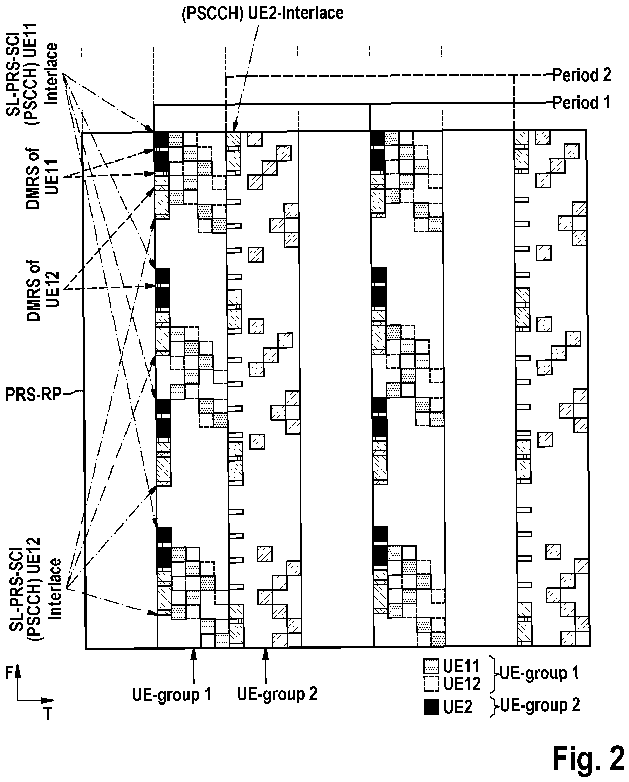

Fig. 2 schematically shows a resource diagram to illustrate the transmission of sidelink positioning reference signals and of respective sidelink control information according to a second embodiment. Again, the horizontal axis represents the time domain and the vertical axis represents the frequency domain.

The design of the radio resources for transmitting SL-PRS using radio resources of the dedicated resource pool PRS-RP and the transmission of the SL-PRS is identical to the first embodiment, see above.

In contrast to the first embodiment, the SCI and the associated reference signal are transmitted using a control resource set made up of multiple separated blocks of consecutive resource elements. Further, the control resource set is distributed across a predetermined proportion of a bandwidth (part) of the dedicated resource pool PRS-RP, preferably spanning a full bandwidth (part) of the dedicated resource pool PRS-RP.

Each of the blocks of consecutive resource elements comprises both resource elements for transmitting the SCI and resource elements for transmitting the reference signal. More specifically, each of the blocks comprises a reference signal group of multiple separated blocks of consecutive resource elements. The reference signal group is distributed across each block. The multiple separated blocks of the reference signal group are separated by at least one radio resource element for transmitting SCI. In Fig. 2, the reference signal group is distributed across each block in the frequency domain. The multiple blocks are separated by at least subcarrier for transmitting SCI in the frequency domain.

As in Fig. 1, the design of the dedicated resource pool PRS-RP allows for multiplexing transmissions of SCI transmitted from different radio nodes to concurrently reserve radio resources of the dedicated resource pool PRS-RP for transmitting SL-PRS.

For the information comprised by the SCI, the reservation of SL-PRS and the release or prolongation of radio resources for transmitting SL-PRS using radio resources of the dedicated resource pool PRS-RP, see the description of the first embodiment as illustrated in Fig. 1.

The basic idea of the design illustrated in Fig. 1 is to provide a pattern for interlacing control channel blocks to span the whole bandwidth, wherein the pattern or interlace structure can be either fixed (with fixed offset) or with a (pre-) configured structure to allow minimum (partial) overlapping. To this end, dedicated (multiple) sidelink configured COntrol REsource SETs (SL-CORESETs) are provided interlacing the whole bandwidth (part) thus allowing for SL transmission on the whole dedicated bandwidth (part) of the dedicated resource pool PRS-RP. As a result, no switching time is required between transmitting SCI and transmitting SL-PRS.

In other words, interlacing here can be considered as dividing SCI into multiple slices (of preferably equal or almost equal sizes in the frequency domain) spanning the whole bandwidth (part) in an interlace structure, also named pattern, as illustrated in Fig. 2. Here, the interlaces or (pre-) configured patterns are provided such that SCI from multiple radio nodes can be interlaced with equal interlace size. Each of the SCI indicates a configured SL-PRS associated with the SCI and its respective interlace structure. In particular, the comb-based interlaces or patterns are non-overlapping in the frequency domain.

Each interlace or pattern may include a specific DMRS group repeated (or present) in each slice of the SCI of an interlace. The location of the DMRS group(s) within the slices can be preconfigured. A single radio node may be configured, to reserve all interlaces, only one interlace or none. In case only one interlace or pattern is reserved by a radio node without any multiplexing with other radio nodes, the other interlaces are left empty.

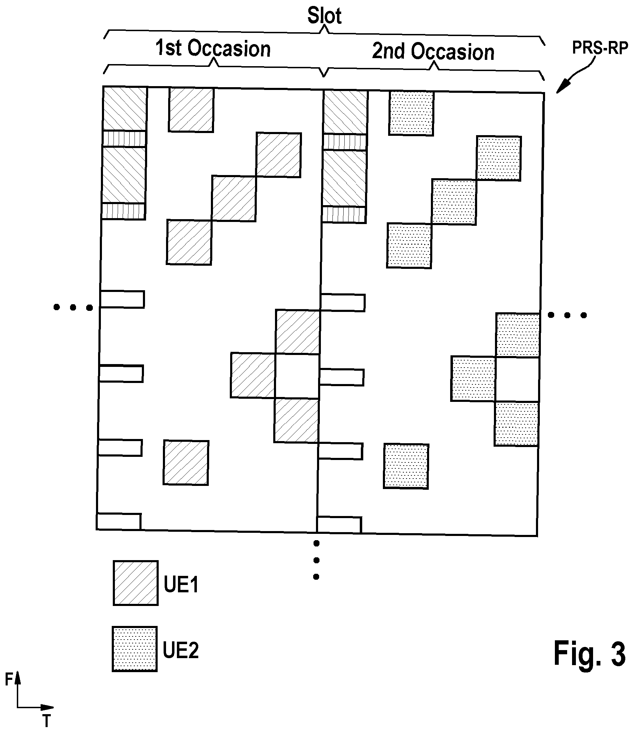

Fig. 3 schematically shows a section of a resource diagram according to a third embodiment. Here, the horizontal axis represents the time domain and the vertical axis represents the frequency domain.

In contrast to the first and second embodiment, a slot of the dedicated resource pool PRS-RP is divided into two parts to allow for two consecutive occasions to transmit SCI and associated SL-PRS within one slot. The parts may be of equal or different size, i.e., number of symbols.

As illustrated in Fig. 3, a first SCI and a first reference signal are transmitted using, e.g., the first two, symbols of a first part of the slot. The associated SL-PRS is transmitted using different, e.g., the succeeding five, symbols of the first part of the slot. A further SCI and a further reference signal are transmitted from the first radio node (UE1) to the second radio node (UE2) using, e.g., the first two, symbols of a second part of the slot. An associated further SL-PRS is transmitted from the first radio node (UE1) to the second radio node (UE2) using different, e.g., the succeeding five, symbols of the second part of the slot.

For each part of the slot, the design of the radio resources for transmitting SCI and SL-PRS using radio resources of the dedicated resource pool PRS-RP and the transmission of the SL-PRS and SCI is analogous to the embodiments of Fig. 1 and Fig. 2. In particular, both control information and SL-PRS is distributed across the whole bandwidth (part) for the respective symbols, at the same time allowing for multiplexing of transmissions from different radio nodes.

For each of the embodiments illustrated in Fig.1, 2, 3, the radio node receiving the SCI and/or the SL-PRS may consider the first symbol of the SCI and/or the SL-PRS for automatically adapting its reception gain control (automatic gain control).

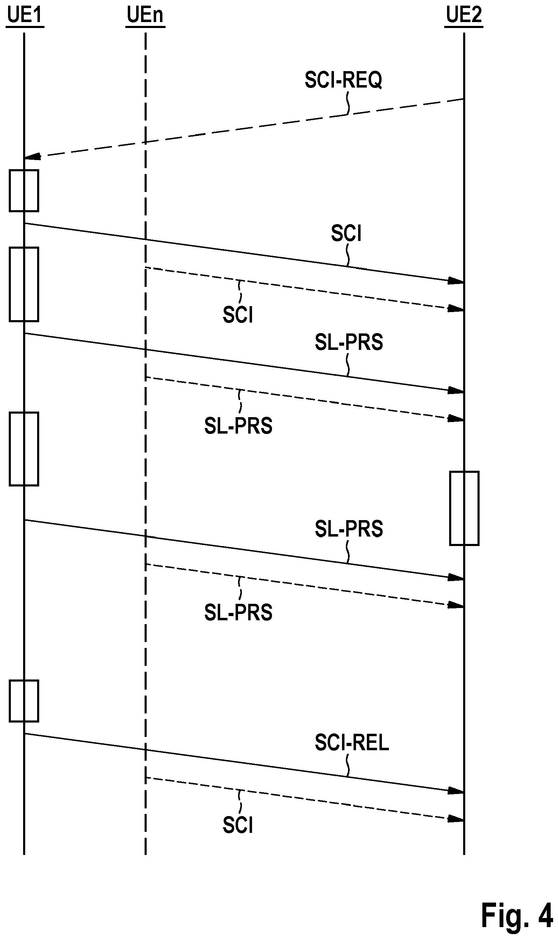

Fig. 4 schematically illustrates a signalling protocol for transmitting SL-PRS and SCI from a first radio node UE1 to a second radio node UE2 according to an embodiment of the invention.

The second radio node UE2 is configured, to transmit a SCI-REQ from the second radio UE2 to the first radio UE1 and preferably to at least one further radio node UEn using radio resources of the dedicated resource pool for transmitting SL-PRS. Here, the transmitted SCI-REQ indicates a request for transmitting a SL-PRS from the first radio node UE1 and preferably the at least one further radio node UEn to the second radio node UE2.

The first radio node UE1 and preferably the at least one further radio node UEn are configured to receive the SCI-REL transmitted from the second radio node UE2. In addition, the first radio node UE1 and preferably the at least one further radio node UEn are configured to generate the SL-PRS and select resources for transmitting the SL-PRS in response to the received SCI-REQ.

Further, the first radio node UE1 and preferably the at least one further radio node UEn are configured, to transmit a SCI to the second radio node UE2 using radio resources of the dedicated resource pool in response to the received SCI from the second radio node UE2. Here, the transmitted SCI indicates radio resources of the dedicated resource pool selected by the respective UE1, UEn for transmitting a SL-PRS. The second radio node UE2 is configured to receive the transmitted SCI from the respective radio node(s) UE1, UEn using the radio resources of the dedicated resource pool.

Moreover, the first radio node UE1 and preferably the at least one further radio node UEn are configured to transmit a SL-PRS to the second radio UE2 using the selected radio resources of the dedicated resource pool. Here, the SL-PRS transmitted by the first radio node UE1 and the SL-PRS transmitted by the at least one further radio node UEn may coexist without interference or collision due to the (pre-) configured patterns being (quasi-)orthogonal in the frequency domain.

The second radio node UE2 is configured to receive the transmitted SL-PRS from the respective radio node(s) UE1, UEn using the selected radio resources of the dedicated resource pool as indicated in the SCI received by the second radio node UE2.

Furthermore, the second radio node UE2 is configured to carry out an algorithm for positioning and/or ranging determination based on the received SL-PRS, wherein the algorithm for positioning and/or ranging is an algorithm known to a person skilled in the art. In other words, the second radio node UE2 is configured to obtain positioning and/or information regarding its position and/or its distance to a reference point/system based on measuring one or multiple SL-PRS.

To this end, the second radio node UE2 may be configured to perform measurements based on detecting the SL-PRS including, e.g., a time of arrival (ToA), a time delay of arrival (TDoA), an angle of arrival (AoA), a round trip time (RTT), or a combination thereof, to determine its position and/or distance.

Optionally, the first radio node UE1 and preferably the at least one further radio node UEn are configured to transmit a further SL-PRS to the second radio UE2 using the selected radio resources of the dedicated resource pool, wherein the further SL-PRS are transmitted according to a repetition information of the (pre-) configured pattern. Here, the repetition information can be (pre-) configured for the selected (pre-) configured pattern and/or included in the SCI transmitted from the respective radio node UE1, UEn to the second radio node UE2. The second radio node UE2 is configured to receive the transmitted further SL-PRS from the respective radio node(s) UE1, UEn using the selected radio resources of the dedicated resource pool.

Besides, the first radio node UE1 and preferably the at least one further radio node UEn are configured to transmit a further SCI-REL to the second radio node UE2 using radio resources of the dedicated resource pool. Here, the further SCI-REL indicates releasing parts of the selected radio resources reserved for transmitting the SL-PRS, e.g., releasing reserved future radio resources in case no further transmission of SL-PRS is requested by the second radio UE2.

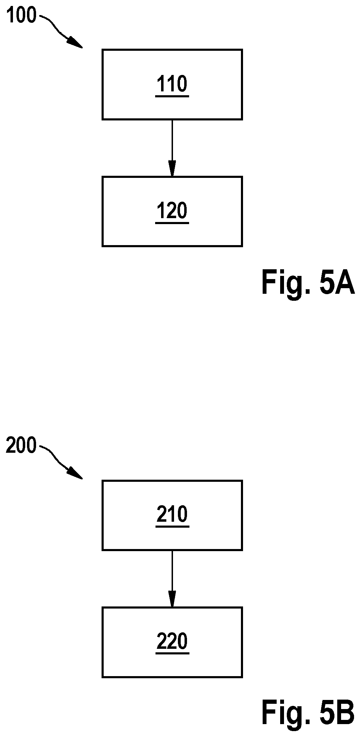

Fig. 5a schematically illustrates a method according to the first aspect. According to a first aspect, there is provided a method 100 of transmitting a sidelink positioning reference signal using radio resources of a dedicated resource pool of a radio access network.

Here, the dedicated resource pool for transmitting sidelink positioning reference signals excludes radio resources for transmitting sidelink communication data in the radio access network. Specifically, the dedicated resource pool and a resource pool for transmitting sidelink communication data in the radio access network are separated in the frequency domain and/or the time domain.

The method 100 comprises a step 110 of transmitting a sidelink control information from a first radio node to a second radio node using radio resources of the dedicated resource pool, wherein the sidelink control information indicates radio resources of the dedicated resource pool selected for transmitting the sidelink positioning reference signal.

Further, the method 100 comprises a step 120 of transmitting the sidelink positioning reference signal from the first radio node to the second radio node using the selected radio resources of the dedicated resource pool.

Fig. 5b schematically illustrates a method according to the second aspect. According to a second aspect, there is provided a method 200 of receiving a sidelink positioning reference signal using radio resources of a dedicated resource pool of a radio access network.

Here, the dedicated resource pool for transmitting sidelink positioning reference signals excludes radio resources for transmitting sidelink communication data in the radio access network. Specifically, the dedicated resource pool and a resource pool for transmitting sidelink communication data in the radio access network are separated in the frequency domain and/or the time domain.

The method 200 comprises a step 210 of receiving a sidelink control information transmitted from a first radio node to a second radio node using radio resources of the dedicated resource pool, wherein the sidelink control information indicates radio resources of the dedicated resource pool selected for transmitting the sidelink positioning reference signal.

Further, the method 200 comprises a step 220 of receiving the sidelink positioning reference signal transmitted from the first radio node to the second radio node using the selected radio resources of the dedicated resource pool.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

## Claims

1. A method (100) of transmitting a sidelink positioning reference signal (SL-PRS) using radio resources of a dedicated resource pool (PRS-RP) of a radio access network,
wherein the dedicated resource pool (PRS-RP) for transmitting sidelink positioning reference signals (SL-PRS) excludes radio resources for transmitting sidelink communication data in the radio access network,
the method (100) comprising:
- Transmitting (110) a sidelink control information (SCI) from a first radio node (UE1) to a second radio node (UE2) using radio resources of the dedicated resource pool (PRS-RP),
wherein the sidelink control information (SCI) indicates radio resources of the dedicated resource pool (PRS-RP) selected for transmitting the sidelink positioning reference signal (SL-PRS); and
- Transmitting (120) the sidelink positioning reference signal (SL-PRS) from the first radio node (UE1) to the second radio node (UE2) using the selected radio resources of the dedicated resource pool (PRS-RP).

2. The method (100) according to claim 1, further comprising:
Transmitting a reference signal (DMRS) associated with the sidelink control information (SCI) from the first radio node (UE1) to the second radio node (UE2) using radio resources of the dedicated resource pool (PRS-RP),
wherein the reference signal (DMRS) and the sidelink control information (SCI) are preferably transmitted using the same one or several symbols of the radio resources.

3. The method (100) according to claim 2, wherein
- the sidelink control information (SCI) is transmitted using one or several consecutive resource elements of the radio resources, and
- the reference signal is transmitted using a reference signal (DMRS) group of multiple separated blocks of at least one or multiple consecutive resource elements, wherein the reference signal (DMRS) group is distributed across a predetermined proportion of a bandwidth or a bandwidth part of the dedicated resource pool (PRS-RP), preferably spanning a full bandwidth or a full bandwidth part of the dedicated resource pool (PRS-RP).

4. The method (100) according to claim 3, wherein the multiple separated blocks of the reference signal (DMRS) group are separated by at least one radio resource element for transmitting sidelink control information (SCI).

5. The method (100) according to claim 4, further comprising:
Transmitting a further sidelink control information (SCI) and a further reference signal (DMRS) from the or a further first radio node (UE1) to the or a further second radio node (UE2) using preferably the same one or several symbols of the radio resources of the dedicated resource pool (PRS-RP), wherein
- the further sidelink control information (SCI) is transmitted using one or several further consecutive resource elements of the radio resources,
- the further reference signal is transmitted using a further reference signal (DMRS) group of multiple further separated blocks of at least one or multiple consecutive resource elements,
- the multiple separated blocks of the further reference signal (DMRS) group are separated by at least one radio resource element for transmitting sidelink control information (SCI), and
- the multiple separated blocks of the reference signal (DRMS) group are further separated by at least block of the further reference signal (DRMS) group.

6. The method (100) according to claim 2, wherein
- the sidelink control information (SCI) and the reference signal (DMRS) are transmitted using a control resource set made up of multiple separated blocks of consecutive resource elements, and
- the control resource set is distributed across a predetermined proportion of a bandwidth or a bandwidth part of the dedicated resource pool (PRS-RP), preferably spanning a full bandwidth or a full bandwidth part of the dedicated resource pool (PRS-RP).

7. The method (100) according to claim 6, wherein each of the blocks of consecutive resource elements comprises both resource elements for transmitting the sidelink control information (SCI) and resource elements for transmitting the reference signal (DMRS).

8. The method (100) according to claim 7, wherein each of the blocks comprises a reference signal (DMRS) group of multiple separated blocks of at least one or multiple consecutive resource elements, wherein the reference signal (DMRS) group is distributed across each block, wherein the multiple separated blocks of the reference signal (DMRS) group are separated by at least one radio resource element for transmitting the sidelink control information (SCI).

9. The method (100) according to one of claims 2 to 8, wherein
- the sidelink control information (SCI) and the reference signal (DMRS) are transmitted using one or several symbols of a first part of a slot of the radio resources, wherein the associated sidelink positioning reference signal (SL-PRS) is transmitted using one or several different symbols of the first part of the slot, and
- a further sidelink control information (SCI) and a further reference signal (DMRS) are transmitted from the first radio node (UE1) to the second radio node (U E2) using one or several symbols of a second part of the slot of the radio resources, wherein an associated further sidelink positioning reference signal (SL-PRS) is transmitted from the first radio node (UE1) to the second radio node (UE2) using one or several different symbols of the second part of the slot.

10. The method (100) to one of the preceding claims, wherein
- the dedicated resource pool (PRS-RP) comprises multiple (pre-) configured patterns of radio resources for transmitting the sidelink positioning reference signal (SL-PRS),
- each of the multiple (pre-) configured patterns is distributed across a predetermined proportion of a bandwidth or a bandwidth part of the dedicated resource pool (PRS-RP), and
- the selected radio resources comprise at least one of the multiple preconfigured patterns.

11. The method (100) according to claim 10, wherein the indication of the selected radio resources in the transmitted sidelink control information (SCI) comprises information regarding at least one of:
- the at least one selected (pre-) configured pattern,
- repetition information, particularly periodicity information of at least one selected (pre-) configured pattern,
- starting time of the transmission of the sidelink positioning reference signal (SL-PRS) using the at least one selected (pre-) configured pattern,
- offset between start of transmission of sidelink control information (SCI) and transmission of the associated sidelink positioning reference signal (SL-PRS).

12. A method (200) of receiving a sidelink positioning reference signal (SL-PRS) using radio resources of a dedicated resource pool (PRS-RP) of a radio access network,
wherein the dedicated resource pool (PRS-RP) for transmitting sidelink positioning reference signals (SL-PRS) excludes radio resources for transmitting sidelink communication data in the radio access network,
the method (200) comprising:
- Receiving (210) a sidelink control information (SCI) transmitted from a first radio node (U E1) to a second radio node (U E2) using radio resources of the dedicated resource pool (PRS-RP),
wherein the sidelink control information (SCI) indicates radio resources of the dedicated resource pool (PRS-RP) selected for transmitting the sidelink positioning reference signal (SL-PRS); and
- Receiving (220) the sidelink positioning reference signal (SL-PRS) transmitted from the first radio node (UE1) to the second radio node (UE2) using the selected radio resources of the dedicated resource pool (PRS-RP).

13. A first radio node (UE1), comprising
- a radio modem,
- a non-transitory computer readable medium comprising machine-readable instructions, and
- a processor configured to load and to execute the machine-readable instructions to cause the first radio node (U E1) to execute the method (100) according to one of claims 1 to 11.

14. A second radio node (UE2), comprising
- a radio modem,
- a non-transitory computer readable medium comprising machine-readable instructions, and
- a processor configured to load and to execute the machine-readable instructions to cause the second radio device to execute the method (200) according to claim 12.

15. A system for radio communication, comprising:
- a first radio node (U E1) as defined by claim 13, and
- a second radio node (UE2) as defined by claim 14.

16. A computer program comprising machine-readable instructions to cause
- the first radio node (UE1) of claim 13 to execute the steps of the method (100) according to one of claims 1 to 11 and/or
- the second radio node (U E2) of claim 14 to execute the steps of the method (200) according claim 12.

17. A non-transitory computer readable medium having stored thereon the computer program of claim 16.
